# EUROPEAN PATENT SPECIFICATION

(11) **EP 4 159 668 B1**
(45) Date of publication and mention of the grant of the patent: **06.08.2025**
(21) Application number: 22167838.6
(22) Date of filing: 12.04.2022
(51) Int. Cl.: B67D 7/04, B67D 7/14, B67D 7/34, H04W 4/80, H04L 67/12, G06Q 20/18, G06Q 20/32, G06Q 20/40, G06Q 20/14, G07F 9/00, G07F 13/02, G07F 15/00, H04L 67/025

(54) **SYSTEM AND METHOD FOR CONTROLLING THE DISPENSING OF FUEL**
SYSTEM UND VERFAHREN ZUR STEUERUNG DER KRAFTSTOFFABGABE
SYSTEME ET PROCEDE DE COMMANDE DE LA DISTRIBUTION DE CARBURANT

(30) Priority: 04.10.2021 IT 202100025319
(43) Date of publication of application: 05.04.2023
(73) Proprietor: PIUSI S.p.A., 46029 Suzzara (MN) (IT)
(72) Inventor: VARINI, Otto, 46029 SUZZARA MN (IT)
(74) Representative: Modiano, Micaela Nadia

(56) References cited:
- EP-A1- 3 272 705

## Description

The present invention relates to a system and a method for controlling the dispensing of fuel by a vending apparatus, particularly but not exclusively useful and practical in the field of fuel vending systems for private use used, for example, by companies operating in the field of freight transport and logistics, or in the delivery sector, for refueling their vehicles.

Currently, fuel vending apparatuses are typically provided with one or more dispensing assemblies or upright pumps, each dispensing assembly being capable of refueling a motor vehicle of a user, i.e., adapted to dispense the fuel, for example gasoline, diesel fuel, LPG or the like, into the tank of said vehicle driven by said user, for example a driver working for a transport company.

The refueling operation involves stopping the vehicle in an area provided for this purpose, proximate to a dispensing upright pump, inserting the dispenser or dispensing nozzle of the upright pump into the filler that gives access to the tank of said vehicle, and starting to dispense fuel.

However, fuel vending apparatuses, particularly for private use, of the known type are not free from drawbacks, which must include the fact that these known solutions, as mentioned typically adopted by transport companies, lead to often indiscriminate and uncontrolled vehicle refueling operations, particularly since no payment is required before or after fuel dispensing.

In fact, known fuel vending apparatuses, particularly for private use, do not track or record in any way the various refueling operations performed therewith. Anyone among the users who have access to one of these known apparatuses can perform an indefinite number of refueling operations of a vehicle without these operations being tracked or recorded in any way.

Another drawback resides in that refueling operations performed by means of fuel vending apparatuses, particularly for private use, of the known type are essentially free, i.e., they are not constrained by any prior verification of the identity and/or authorization of the driver user before said driver user accesses one of these known apparatuses and performs said refueling operations.

A further drawback of fuel vending apparatuses, particularly for private use, of the known type resides in that they do not offer to a user in charge, for example the owner or manager of a transport company, the possibility to monitor the refueling operations performed by virtue of the apparatuses and consequently monitor fuel consumption in general and the fuel consumption of a specific motor vehicle in particular.

EP3272705 describes a system (10) for controlling the dispensing of fuel by a distribution apparatus, particularly for private use, which comprises one or more dispensing units (12), one or more mobile processing devices (14) operated by respective driver users (72), and a central remote processing device (20); the mobile devices (14) are in communication with the central remote device (20) by way of a telematic communications network (18); the dispensing units (12) and the mobile processing devices (14) comprise respective short-range wireless communication modules (26) that are adapted to establish a short-range wireless communication session between the dispensing units (12) and the mobile devices (14), the mobile devices (14) being adapted and configured to allow the transmission of data originating from the dispensing units (12) to the central remote processing device (20).

The aim of the present invention is to overcome the drawbacks of the background art mentioned above, devising a system and a method for controlling the dispensing of fuel by a vending apparatus, particularly for private use, that allow to obtain effectiveness and efficiency levels in the refueling of vehicles that are greater than those obtainable with known solutions and/or similar effectiveness and efficiency levels at a lower cost.

Within this aim, an object of the present invention is to conceive a system and a method for controlling the dispensing of fuel by a vending apparatus, particularly for private use, that allow to track and control the quantity of fuel dispensed in each instance for the refueling of a specific vehicle driven by a specific user.

Another object of the present invention is to devise a system and a method for controlling the dispensing of fuel by a vending apparatus, particularly for private use, that allow to preliminarily verify the identity and/or the authorization of the user before said user accesses said apparatus and performs the refueling operations.

Another object of the present invention is to devise a system and a method for controlling the dispensing of fuel by a vending apparatus, particularly for private use, that allow to perform the refueling operations in a flexible manner, in particular independently of the conditions of connection to a telematic communication network.

A further object of the present invention is to conceive a system and a method for controlling the dispensing of fuel by a vending apparatus, particularly for private use, that allow to utilize adequate reporting, even in real time, which is of primary importance for the monitoring, by a user in charge, of the refueling operations performed by means of the apparatus, and consequently of fuel consumption in general and of the fuel consumption of a specific motor vehicle in particular.

Not least object of the present invention is to provide a system for controlling the dispensing of fuel by a vending apparatus that is highly reliable, relatively simple to provide and at competitive costs.

This aim and these and other objects which will become better apparent hereinafter are achieved by a system, as further defined in claim 1, and a method, as further defined in claim 14.
Figure 1 is a schematic view that illustrates an embodiment of the system for controlling the dispensing of fuel by a vending apparatus according to the present invention;
Figure 2 is a block diagram that illustrates schematically the central remote processing device of an embodiment of the system for controlling the dispensing of fuel by a vending apparatus, according to the present invention;
Figure 3 is a block diagram that illustrates schematically the mobile processing device of an embodiment of the system for controlling the dispensing of fuel by a vending apparatus, according to the present invention;
Figure 4 is a block diagram that illustrates schematically the dispensing assembly of an embodiment of the system for controlling the dispensing of fuel by a vending apparatus, according to the present invention.

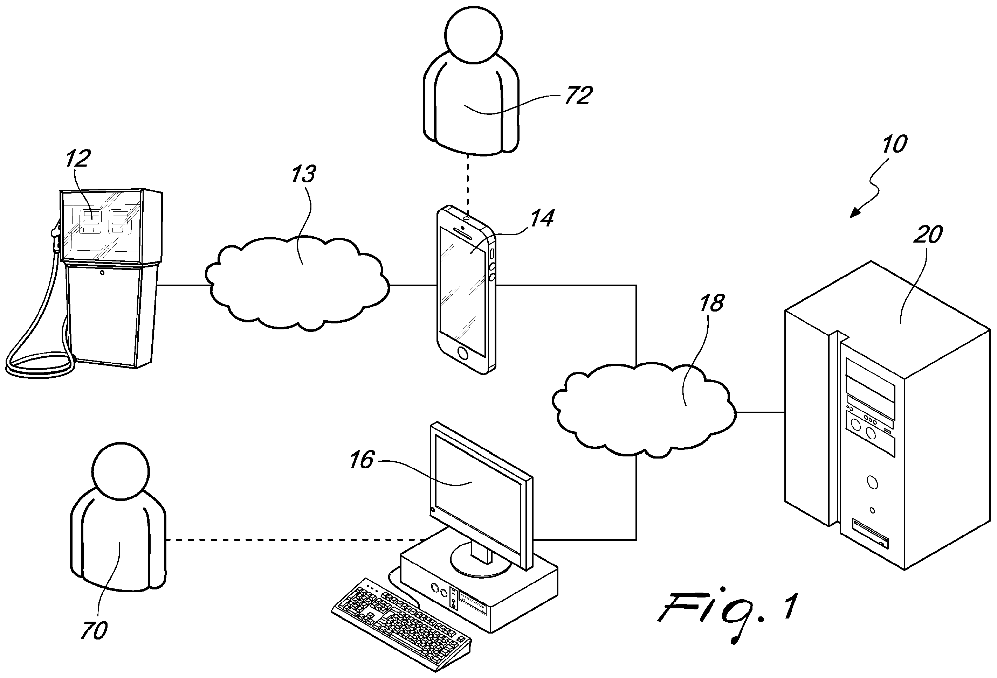

With reference to Figure 1, the system for controlling the dispensing of fuel by a vending apparatus, particularly for private use, according to the invention, generally designated by the reference numeral 10, comprises substantially at least one dispensing assembly 12, at least one mobile processing device 14, and a central remote processing device 20. Preferably, the system 10 according to the invention further comprises a manager processing device 16.

It should be noted that within the scope of the present invention, the dispensing assemblies 12 can be located even at great distances from each other, such as for example in different cities, but also in different regions or even in different states.

The dispensing assembly 12 and the mobile device 14 are mutually connected or connectable by means of a short-range wireless communication network 13, preferably of the Bluetooth type, and even more preferably of the BTLE (Bluetooth Low Energy) type.

The mobile device 14 and the central remote device 20 are mutually connected or connectable by means of a telematic communication network 18, for example the Internet. Likewise, the manager device 16 and the central remote device 20 are mutually connected or connectable via the telematic communication network 18.

The mobile device 14, such as for example a smartphone or a tablet, is operated by a driver user 72 of the system 10 according to the invention, such as for example a driver employed by a transport company, who performs the refueling of his own vehicle when necessary.

The manager device 16, such as for example a desktop computer and also a smartphone or a tablet, is instead operated by a user 70 in charge of the system 10 according to the invention, such as for example the owner or the manager of a transport company, who supervises the refueling operations performed by virtue of the apparatus and monitors the fuel consumption.

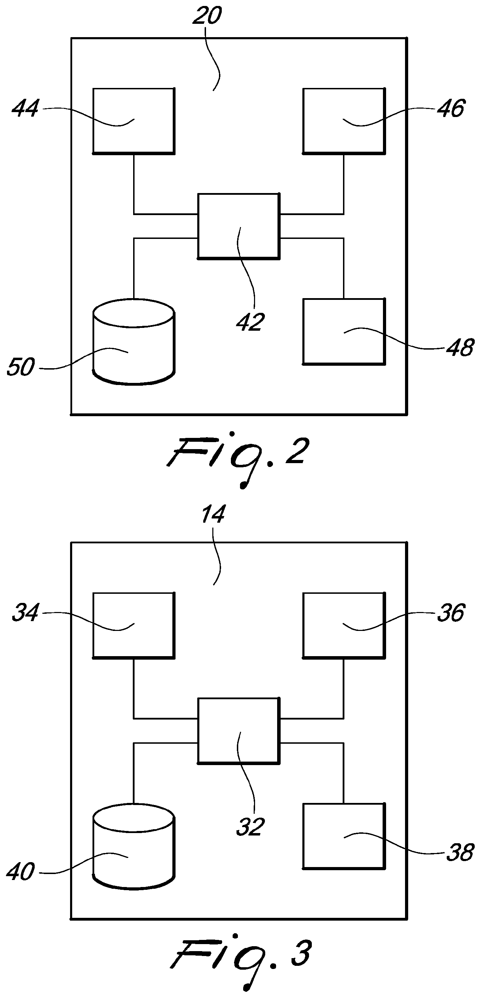

With reference to Figure 2, the central remote processing device 20 of the system 10 for controlling the dispensing of fuel by a vending apparatus, according to the invention, is a system of the server type, preferably a web server, comprising an electronic control unit 42, interface means 44, a telematic communication module 48, and remote storage means 50.

The electronic control unit 42 is the main functional element of the central remote device 20, and for this reason it is connected to and in communication with the other operational and/or functional elements comprised in the central remote device 20.

The electronic control unit 42 of the central remote device 20 is provided with appropriate capabilities for calculating and interfacing with the other elements of the central remote device 20, and is configured for commanding, controlling and coordinating the operation of the elements of the central remote device 20 with which it is connected and in communication, as well as for performing the operations of processing data or the requests originating from said elements of the central remote device 20 and/or from the mobile device 14 and/or from the manager device 16, returning the corresponding results to them.

The interface means 44 of the central remote device 20 are the means by virtue of which the manager device 16, operated by the user in charge 70, interacts in input and/or in output with said central remote device 20. In practice, the interface means 44 offer externally and/or collect from the outside a plurality of information items in the form of screens, in which data can be entered if necessary, that the user in charge 70 can in each instance select and display by means of the manager processing device 16.

By way of example, the interface means 44 of the central remote device 20 offer the user in charge 70, by means of the manager device 16, the possibility to: create and update the information and the data stored in the remote storage means 50 of said central remote device 20 or in the local storage means 30 of the dispensing assemblies 12, update the list of the driver users 72 who are registered and authorized at the dispensing assemblies 12, or configure the operating parameters of the dispensing assemblies 12.

The interface means 44 can offer the user in charge 70, by means of the manager device 16, the possibility to create and fill out an account or profile associated with each user in charge 70 or driver 72. Likewise, the interface means 44 can offer the user in charge 70, by means of the manager device 16, the possibility to create and fill out an account or profile associated with each dispensing assembly 12.

In a preferred embodiment, the central remote device 20 further comprises a reporting module 46. The reporting module 46 is configured to produce and supply, starting from what is stored in the remote storage means 50, aggregate information and statistical data about the refueling operations as a whole and individually, preferably generating summary tables and charts of the refueling performed by the driver users 72.

The reporting module 46 of the central remote device 20 allows moreover to preserve said aggregate information and statistical data, by storing them in the remote storage means 50.

In this preferred embodiment, the interface means 44 of the central remote device 20 further offer the user in charge 70 the possibility to request and display said aggregate information and statistical data, preferably in the form of summary tables and charts, produced by the reporting module 46.

The reporting module 46 provides detailed information, even in real time, on the refueling operations performed by means of the apparatus, and on the quantity of fuel dispensed, including for example the number of refueling operations performed by a specific driver user 72 or at a dispensing assembly 12, or the quantity of fuel dispensed by a single dispensing assembly 12 or by a plurality of dispensing assemblies 12, all this both in chart form and in table form.

This can occur, for example, based on a time interval, based on the city or the geographic area, based on the driver user 72 (for example by filtering by identification code), based on the vehicle (for example by filtering by registration plate), based on the type of fuel, or also based on the dispensing assembly 12.

The telematic communication module 48 of the central remote device 20 is adapted for the preferably bidirectional connection and communication of said central remote device 20 with the mobile device 14 and with the manager device 16, via the telematic communication network 18.

The remote storage means 50 of the central remote device 20 are adapted to store all the information and all the data related to the system 10 as a whole. In particular, the remote storage means 50 store the latest (i.e., the most recent) version of the operating parameters of each dispensing assembly 12, and the latest (i.e., the most recent) version of the list of the driver users 72 registered and authorized to perform refueling operations at the dispensing assemblies 12.

The central remote device 20 is configured to send toward the mobile device 14, via the telematic communication network 18, the latest (i.e., the most recent) version of the operating parameters of each dispensing assembly 12 to which the specific driver user 72 who operates said mobile device 14 is authorized and the latest (i.e., the most recent) version of the list of the driver users 72 registered and authorized to perform refueling operations at the dispensing assemblies 12.

Moreover, the remote storage means 50 store the information and the data related to all the registered and authorized driver users 72, transmitted by the manager device 16 to the central remote processing device 20 via the telematic communication network 18. By way of example, the remote storage means 50 can store, for each driver user 72: identification code *(DriverID),* name and surname, optionally authentication code (for example PIN codes and/or *iButton* code), optionally enabling flag (a bit or the like which identifies whether the driver user 72 is enabled for refueling at the dispensing assemblies 12 of the system 10), list of refueling operations. It should be noted that the remote storage means 50 do not store an identification code of the mobile device 14 operated by the driver user 72.

The central remote device 20 is configured to send toward the mobile device 14, via the telematic communication network 18, the information and data related to the specific driver user 72 who operates said mobile device 14, particularly the identification code *(DriverID),* name and surname, optionally authentication code (for example PIN code and/or *iButton* code) optionally enabling flag.

Moreover, the remote storage means 50 store the information and data related to all the refueling operations performed at all the dispensing assemblies 12, transmitted by the manager devices 14 to the central remote processing device 20 via the telematic communication network 18. By way of example, the remote storage means 50 can store, for each refueling: identification code of the dispensing assembly 12 where the refueling was performed, identification code of the refueling, date and time of the refueling, quantity of fuel dispensed during the refueling, identification code of the driver user 72 who performed the refueling, name and surname of the driver user 72 who performed the refueling, registration plate of the vehicle refueled in the refueling, brand and/or model of the vehicle refueled in the refueling.

The central remote device 20 is configured to receive from the mobile device 14, via the telematic communication network 18, the information and data related to the past refueling operations performed at the dispensing assembly 12, if such information and data have not already been received.

Moreover, the remote storage means 50 can store an account or profile associated with each user in charge 70 or driver 72. Likewise, the remote storage means 50 can store an account or profile associated with each dispensing assembly 12.

In one embodiment, the remote storage means 50 can be external to the central remote processing device 20; in this case, the central remote device 20 further comprises means for interfacing with the remote storage means 50.

The manager processing device 16, as mentioned for example a desktop computer but also a smartphone or a tablet, is configured to process information and data following instructions provided by the user in charge 70.

The manager device 16 comprises a telematic communication module suitable for the preferably bidirectional connection and communication of said manager device 16 with the central remote device 20, via the telematic communication network 18.

The manager device 16 is configured to allow the user in charge 70 to interact with the interface means 44 of the central remote device 20. By way of example, the manager device 16 interfaces with the central remote device 20, offering the user in charge 70 the possibility to: create and update the information and data stored in the remote storage means 50 of the central remote device 20 or in the mobile storage means 40 of the mobile device 14 or in the local storage means 30 of the dispensing assemblies 12, update the list of the driver users 72 who are registered and authorized at the dispensing assemblies 12, configure the operating parameters of the dispensing assemblies 12, or request and display summary tables and charts generated by the reporting module 46.

The manager device 16 interfaces with the central remote device 20, offering the user in charge 70 the possibility to create and fill out an account or profile associated with each user in charge 70 or driver 72. Likewise, the manager device 16 interfaces with the central remote device 20, offering the user in charge 70 the possibility to create and fill out an account or profile associated with each dispensing assembly 12.

With reference to Figure 3, the mobile processing device 14, for example, as mentioned, a smartphone or a tablet, of the system 10 for controlling the dispensing of fuel by a vending apparatus, according to the invention, comprises an electronic control unit 32, an authorization verification module 34, a short-range wireless communication module 36, a telematic communication module 38, and mobile storage means 40.

The electronic control unit 32 is the main functional element of the mobile device 14, and for this reason it is connected to and in communication with the other operational and/or functional elements comprised in the mobile device 14.

The electronic control unit 32 of the mobile device 14 is provided with appropriate capabilities for calculating and interfacing with the other elements of the mobile device 14, and is configured to command, control and coordinate the operation of the elements of the mobile device 14 with which it is connected and in communication, as well as to perform the operations of processing the data or the requests originating from said elements of the mobile device 14 and/or from the dispensing assembly 12 and/or from the central remote device 20, returning the corresponding results to them.

The short-range wireless communication module 36 of the mobile device 14, preferably of the Bluetooth type and even more preferably of the BTLE (Bluetooth Low Energy) type, is adapted for the preferably bidirectional connection and communication of said mobile device 14 with the dispensing assembly 12, via the short-range wireless communication network 13. In particular, this short-range wireless communication is established when the mobile device 14 and the dispensing assembly 12 are mutually in range, i.e., within operating distance.

In order to establish a preferably bidirectional short-range wireless communication between them, the dispensing assembly 12 and the mobile device 14 can be configured to perform operations for pairing, i.e., the process of mutual recognition that is performed for example when two Bluetooth devices are mutually connected and consists in exchanging and verifying a unique identification code, in order to authorize the subsequent exchange of data between said devices.

In other words, once the dispensing assembly 12 and the mobile device 14, and in particular the respective short-range wireless communication modules, are arranged at an appropriate distance (for example, in a radius of 10-15 meters) or placed substantially in contact, they exchange recognition information, such as for example a unique identification code which allows mutual recognition.

The telematic communication module 38 of the mobile device 14 is adapted for the preferably bidirectional connection and communication of said mobile device 14 with the central remote device 20, via the telematic communication network 18.

The mobile storage means 40 of the mobile device 14 are adapted to store a portion of the information and data stored in the remote storage means 50 of the central remote device 20.

The mobile device 14 is configured to receive, or rather download, preferably following a login operation or the like, from the central remote device 20, via the telematic communication network 18, the latest (i.e., the most recent) version of the operating parameters of each dispensing assembly 12 to which the specific driver user 72 who operates the mobile device 14 is authorized and the latest (i.e., the most recent) version of the list of the driver users 72 who are registered and authorized to perform refueling operations at the dispensing assemblies 12.

The mobile storage means 40 of the mobile device 14 store the latest (i.e., the most recent) version of the operating parameters of each dispensing assembly 12 to which the specific driver user 72 who operates the mobile device 14 is authorized, and the latest (i.e., the most recent) version of the list of the driver users 72 who are registered and authorized to perform refueling operations at the dispensing assemblies 12.

In particular, the mobile storage means 40 store the latest (i.e., the most recent) version of the list of the driver users 72 who are registered and authorized to perform refueling operations at the dispensing assemblies 12, so that the driver user 72 can obtain the authorization to use the dispensing assembly 12, in order to perform the refueling of his own vehicle, even if the connection with the telematic communication network 18 for communication with the central remote processing device 20 is temporarily unavailable.

Furthermore, the mobile device 14 is configured to receive, or rather download, preferably following a login operation or the like, from the central remote device 20, via the telematic communication network 18, the information and data related to the specific driver user 72 who operates said mobile device 14, particularly an identification code *(DriverID),* name and surname, optionally an authentication code (for example PIN code and/or *iButton* code), optionally an enabling flag.

The mobile storage means 40 of the mobile device 14 store the information and data related to the specific driver user 72 who operates said mobile device 14, particularly an identification code *(DriverID),* name and surname, optionally an authentication code (for example PIN code and/or *iButton* code), optionally an enabling flag.

The mobile device 14 is configured to receive the data coming from the dispensing assembly 12, via the short-range wireless communication network 13, and forward them to the central remote device 20, via the telematic communication network 18. For example, these data are related to the past refueling operations performed at the dispensing assembly 12, if such data have not already been received and forwarded.

Likewise, the mobile device 14 is configured to receive the data coming from the central remote device 20, via the telematic communication network 18, and forward them toward the dispensing assembly 12, via the short-range wireless communication network 13. For example, these data are related to the latest (i.e., the most recent) version of the operating parameters of the dispensing assembly 12, and/or the latest (i.e., the most recent) version of the list of the driver users 72 who are registered and authorized to perform refueling operations at the dispensing assemblies 12.

It should be noted that the mobile device 14 does not need to be connected necessarily to the telematic communication network 18 except during the reception of data arriving from the central remote device 20 or the transmission of data toward it, as described above. Therefore, the system 10 according to the invention can operate even in the absence of a connection with the telematic communication network 18.

Advantageously, the mobile device 14 is configured to request the dispensing assembly 12 to send, via the short-range wireless communication network 13, the version of the operating parameters currently configured in the dispensing assembly 12, and to compare such version with the version of the operating parameters stored in said mobile device 14.

In one embodiment, if the version of the operating parameters currently configured in the dispensing assembly 12 is older than the version of the operating parameters stored in the mobile device 14, the latter is configured to send toward the dispensing assembly 12, via the short-range wireless communication network 13, the operating parameters stored in the mobile device 14.

In one embodiment, if the version of the operating parameters currently configured in the dispensing assembly 12 is identical to the version of the operating parameters stored in the mobile device 14, no exchange or synchronization of data occurs.

In one embodiment, if the version of the operating parameters currently configured in the dispensing assembly 12 is more recent than the version of the operating parameters stored in the mobile device 14, the latter is configured to request the dispensing assembly 12 to send, via the short-range wireless communication network 13, the operating parameters stored in the dispensing assembly 12.

Advantageously, the mobile device 14 is configured to request the dispensing assembly 12 to send, via the short-range wireless communication network 13, the version of the list of the driver users 72 currently registered and authorized at the dispensing assembly 12, and to compare such version with the version of the list of the registered and authorized driver users 72 stored in the mobile device 14.

In one embodiment, if the version of the list of the driver users 72 currently registered and authorized at the dispensing assembly 12, is older than the version of the list of the registered and authorized driver users 72 stored in the mobile device 14, the latter is configured to send toward the dispensing assembly 12, via the short-range wireless communication network 13, the list of registered and authorized driver users 72 stored in the mobile device 14.

In one embodiment, if the version of the list of the driver users 72 currently registered and authorized at the dispensing assembly 12 is identical to the version of the list of the registered and authorized driver users 72 stored in the mobile device 14, no exchange or synchronization of data occurs.

In one embodiment, if the version of the list of driver users 72 currently registered and authorized at the dispensing assembly 12 is more recent than the version of the list of the registered and authorized driver users 72 stored in the mobile device 14, the latter is configured to request the dispensing assembly 12 to send, via the short-range wireless communication network 13, the list of registered and authorized driver users 72 stored in the dispensing assembly 12.

In one embodiment, if the version of the list of driver users 72 currently registered and authorized at the dispensing assembly 12 is more recent than the version of the list of the registered and authorized driver users 72 stored in the mobile device 14, the latter is configured to request the dispensing assembly 12 to send, via the short-range wireless communication network 13, the memory address in which the data of the specific driver user 72 who operates the mobile device 14 and is trying to perform a refueling operation are stored.

The dispensing assembly 12 can reply to such request by sending to the mobile device 14 two different data items: the memory address (*addrX*) in which the date of the driver user 72 are stored, or an empty address *(addr0)* if the specific driver user 72 is not included in the list of registered and authorized driver users 72 stored in the dispensing assembly 12. For example, the driver user 72 can be identified by means of the respective identification code *(DriverID).*

If the mobile device 14 receives from the dispensing assembly 12 the memory address (*addrX*) wherein the data of the driver user 72 are stored, the mobile device 14 is configured to request the dispensing assembly 12 to send, again via the short-range wireless communication network 13, the contents of the portion of memory associated with the received memory address (*addrX*), in order to update the list of registered and authorized driver users 72 stored in the mobile device 14.

The authorization verification module 34 of the mobile device 14 is configured to enable the dispensing of fuel for the refueling of a motor vehicle only as consequence of the connection between the mobile device 14 and the dispensing assembly 12, via the short-range wireless communication network 13, if the specific driver user 72 who operates the mobile device 14 is included in the list of driver users 72 who are registered and authorized at the dispensing assembly 12, which is stored in the mobile device 14.

In practice, the authorization verification module 34 controls the presence of the driver user 72 in the list of the driver users 72 who are registered and authorized at the dispensing assembly 12; fuel dispensing is enabled if the driver user 72 is present in the list, otherwise fuel dispensing is blocked.

Advantageously, the enabling of fuel dispensing by the authorization verification module 34 comprises the sending of a dispensing start command from the mobile device 14 toward the dispensing assembly 12, via the short-range wireless communication network 13.

The list of the driver users 72 who are registered and authorized at the dispensing assembly 12 can comprise, for each driver user 72: an identification code *(DriverID),* name and surname, optionally an authentication code (for example PIN code and/or *iButton* code), optionally an enabling flag.

Therefore, the control performed by the authorization verification module 34 on the presence of the driver user 72 in the list of driver users 72 who are registered and authorized at the dispensing assembly 12 can be performed by identification code *(DriverID)* or by name and surname.

Optionally, the authorization verification module 34 is further configured to enable fuel dispensing for the refueling of a vehicle if the enabling flag of the specific driver user 72 who operates the mobile device 14 is set to 1 or the like, the driver user 72 being included in the list of driver users 72 who are registered and authorized at the dispensing assembly 12, stored in the mobile device 14.

Advantageously, the driver user 72 is enabled to use the dispensing assembly 12 in order to perform the refueling with fuel of his own vehicle for a finite period; this authorization is in fact limited in time and its duration corresponds to a time period that can be adjusted by the user in charge 70. When the time period of the authorization reaches its end, the driver user 72 is no longer enabled to dispense fuel at the dispensing assembly 12, unless a new enabling operation is performed.

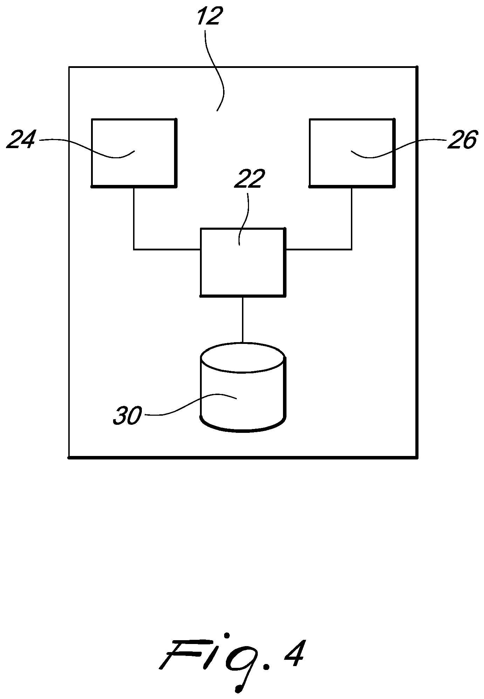

With reference to Figure 4, the dispensing assembly 12 of the system 10 for controlling the dispensing of fuel by a vending apparatus, according to the invention, comprises an electronic control unit or controller 22, dispensing means 24, a short-range wireless communication module 26, and local storage means 30.

The electronic control unit 22 is the main functional element of the dispensing assembly 12, and for this reason it is connected to and in communication with the other operational and/or functional elements comprised in the dispensing assembly 12.

The electronic control unit 22 of the dispensing assembly 12 is provided with appropriate capabilities for calculating and interfacing with the other elements of the dispensing assembly 12, and is configured to command, control and coordinate the operation of the elements of the dispensing assembly 12 with which it is connected and in communication, as well as to perform the operations of processing the data or the requests originating from the elements of the dispensing assembly 12 and/or from the mobile device 14, returning the corresponding results to them.

The dispensing means 24 of the dispensing assembly 12 are adapted to draw the fuel from a tank connected to them by a duct and to dispense the fuel thus drawn inside the tank of a motor vehicle.

The dispensing means 24 comprise at least one pumping element or pump, and at least one dispenser or dispensing nozzle. In one embodiment, the dispensing means 24 comprise a pump and a dispensing nozzle for each type of fuel available: for example, a first pump and a first dispensing nozzle for gasoline, a second pump and a second dispensing nozzle for diesel fuel, and so forth.

The short-range wireless communication module 26 of the dispensing assembly 12, preferably of the Bluetooth type and even more preferably of the BTLE (Bluetooth Low Energy) type, is adapted for the preferably bidirectional connection and communication of the dispensing assembly 12 with the mobile device 14, via the short-range wireless communication network 13. In particular, this short-range wireless communication is established when the dispensing assembly 12 and the mobile device 14 are mutually in range, i.e., within operating distance.

In the preferred embodiment of the system 10 according to the invention, in which the short-range wireless communication module 26 of the dispensing assembly 12 is of the Bluetooth type, the Bluetooth module 26 can integrate a microcontroller adapted to manage the Bluetooth communication with the mobile device 14, according to the corresponding protocols, an adapted to manage the radio transmission by means of an antenna provided directly on the printed circuit.

The local storage means 30 of the dispensing assembly 12 are adapted to store a portion of the information and data stored in the remote storage means 50 of the central remote device 20.

The local storage means 30 are adapted to store the information and the data related to the dispensing assembly 12 and therefore related to all the refueling operations performed thereat. By way of example, the local storage means 30 can store, for each refueling: identification code of the refueling, date and time of the refueling, quantity of fuel dispensed during the refueling, identification code of the driver user 72 who performed the refueling, name and surname of the driver user 72 who performed the refueling, registration plate of the motor vehicle refueled in the refueling, brand and/or model of the motor vehicle refueled in the refueling.

These data stored in the local storage means 30, or a selection thereof, are transmitted by the dispensing assembly 12 toward the mobile device 14, which then forwards them toward the central remote device 20, as explained previously.

The local storage means 30 store the latest (i.e., the most recent) version of the operating parameters of the dispensing assembly 12 and the latest (i.e., the most recent) version of the list of the driver users 72 who are registered and authorized to perform refueling operations at the dispensing assemblies 12.

These data stored in the local storage means 30, or a selection thereof, are transmitted by the central remote device 20 toward the mobile device 14, which then forwards them toward the dispensing assembly 12, as explained previously.

In one embodiment, the dispensing assembly 12 further comprises authentication means configured for the entry of an authentication code by the driver user 72, and to verify the presence of the driver user 72 associated with the authentication code in the list of driver users 72 who are registered and authorized to use the dispensing assembly 12 in order to perform refueling with fuel.

In this embodiment, the dispensing assembly 12 is configured so as to enable the dispensing of fuel for the refueling of a vehicle only and exclusively following the positive outcome of the authentication of the driver user 72 via the authentication means, i.e., if the user who has entered his own authentication code is included in the list of the driver users 72 who are registered and authorized at the dispensing assembly 12.

In one embodiment, the authentication means comprise a numeric keypad and the authentication code is a PIN (acronym of Personal Identification Number) code.

In one embodiment, the authentication means comprise a reader of *iButton* devices and the authentication code is an *iButton* code. In this embodiment, the driver user 72 has an *iButton* device in which the *iButton* code is registered.

In practice it has been found that the invention fully achieves the intended aim and objects. In particular, it has been shown that the system and method for managing the dispensing of fuel by a vending apparatus, particularly for private use, thus conceived allow to overcome the qualitative limitations of the background art, since they allow to obtain greater effectiveness and efficiency levels in the refueling of motor vehicles than those obtainable with known solutions and/or similar effectiveness and efficiency levels at a lower cost.

An advantage of the system and method for controlling the dispensing of fuel by a vending apparatus, according to the present invention, consists in that they allow to track and control remotely the quantity of fuel dispensed in each instance for the refueling of a specific motor vehicle driven by a specific user.

Another advantage of the system and method for controlling the dispensing of fuel by a vending apparatus, according to the present invention, consists in that they allow to verify preliminarily the identity and/or the authorization of the driver user before the driver user accesses the apparatus and performs the refueling operations.

Another advantage of the system and method for controlling the dispensing of fuel by a vending apparatus, according to the present invention, consists in that they allow to perform the refueling operations in a flexible manner, particularly independently of the conditions of connection to a telematic communication network.

Moreover, an advantage of the system and method for controlling the dispensing of fuel by a vending apparatus, according to the present invention, resides in that they allow to use adequate reporting, even in real time, which is of primary importance for the monitoring, by a user in charge, of the refueling operations performed by virtue of the apparatus, and consequently of fuel consumption in general, and of the fuel consumption of a specific motor vehicle in particular.

Although the system and method for controlling the dispensing of fuel by a vending apparatus according to the invention has been conceived particularly for private use, for example for refueling motor vehicles used by companies operating in the field of freight transport and logistics, or in the delivery sector, it may however be used, more generally, in the field of any fuel vending apparatus used for the refueling of any motor vehicle.

The invention thus conceived is susceptible of numerous modifications and variations, all of which are within the scope of the appended claims ; by way of non-limiting example, the person skilled in the art understands without any effort that it is also possible to provide a mechanical or electromechanical device that can be actuated by a user to stop the dispensing of the fuel in case of emergency. All the details may furthermore be replaced with other technically equivalent elements.

In practice, the materials used, so long as they are compatible with the specific use, as well as the contingent shapes and dimensions, may be any according to the requirements and the state of the art.

To conclude, the scope of the protection of the claims must not be limited by the illustrations or by the preferred embodiments illustrated in the description as examples, but rather the claims must comprise all the characteristics of patentable novelty that reside in the present invention.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A system (10) for controlling the dispensing of fuel comprising at least one dispensing assembly (12), at least one mobile processing device (14) operated by a respective driver user (72), and a central remote processing device (20), said at least one dispensing assembly (12) and said at least one mobile processing device (14) being mutually connectable by means of a short-range wireless communication network (13), said at least one mobile processing device (14) and said central remote device (20) being mutually connectable by means of a telematic communication network (18), **characterized in that** said at least one mobile processing device (14) comprises:
- mobile storage means (40) configured to store a list of driver users (72) who are registered and authorized at said at least one dispensing assembly (12); and
- an authorization verification module (34) configured to enable the dispensing of fuel as a consequence of the connection between said at least one mobile processing device (14) and said at least one
dispensing assembly (12), by virtue of respective short-range wireless communication modules (26, 36), if said driver user (72) is included in said list of driver users (72) registered and authorized at said dispensing assembly (12)
wherein said enabling of the dispensing of fuel performed by said authorization verification module (34) comprises the sending of a dispensing start command from said at least one mobile processing device (14) toward said at least one dispensing assembly (12) via said short-range wireless communication network (13).

2. The system (10) for controlling the dispensing of fuel according to claim 1, **characterized in that** said enabling of the dispensing of fuel performed by said authorization verification module (34) is limited in time and its duration corresponds to an adjustable time period.

3. The system (10) for controlling the dispensing of fuel by according to any one of the preceding claims, **characterized in that** said at least one mobile processing device (14) is configured to receive data related to past refueling operations from said at least one dispensing assembly (12), via said short-range wireless communication network (13), and to forward them toward said central remote device (20) via said telematic communication network (18).

4. The system (10) for controlling the dispensing of fuel by according to any one of the preceding claims, **characterized in that** said at least one mobile processing device (14) is configured to receive said list of driver users (72) registered and authorized at said at least one dispensing assembly (12) from said central remote device (20) via said telematic communication network (18).

5. The system (10) for controlling the dispensing of fuel according to any one of the preceding claims, **characterized in that** said at least one mobile processing device (14) is configured to request from said at least one dispensing assembly (12) the version of said list of driver users (72) currently registered and authorized at said at least one dispensing assembly (12) and to compare said version with the version of said list of registered and authorized driver users (72) stored in said at least one mobile processing device (14).

6. The system (10) for controlling the dispensing of fuel according to any one of the preceding claims, **characterized in that** said at least one mobile processing device (14) is configured to forward said list of driver users (72) registered and authorized at said at least one dispensing assembly (12) toward said at least one dispensing assembly (12) via said short-range wireless communication network (18).

7. The system (10) for controlling the dispensing of fuel according to any one of the preceding claims, **characterized in that** said mobile storage means (40) of said at least one mobile processing device (14) are further configured to store operating parameters of said at least one dispensing assembly (12).

8. The system (10) for controlling the dispensing of fuel by according to claim 7, **characterized in that** said at least one mobile processing device (14) is configured to receive said operating parameters of said at least one dispensing assembly (12) from said central remote device (20) via said telematic communication network (18).

9. The system (10) for controlling the dispensing of fuel by according to claim 7 or 8, **characterized in that** said at least one mobile processing device (14) is configured to request from said at least one dispensing assembly (12) the version of said operating parameters currently configured in said at least one dispensing assembly (12) and to compare said version with the version of said operating parameters that is stored in said at least one mobile processing device (14).

10. The system (10) for controlling the dispensing of fuel according to claims 7, 8 or 9, **characterized in that** said at least one mobile processing device (14) is further configured to forward said list of driver users (72) registered and authorized at said at least one dispensing assembly (12) toward said at least one dispensing assembly (12) via said short-range wireless communication network (18).

11. The system (10) for controlling the dispensing of fuel according to any one of the preceding claims, **characterized in that** it further comprises a manager processing device (16) operated by a respective user in charge (70), said manager device (16) and said central remote device (20) being mutually connectable via said telematic communication network (18), said manager device (16) being configured to allow said user in charge (70) to interact with said central remote processing device (20).

12. The system (10) for controlling the dispensing of fuel according to claim 11, **characterized in that** said manager processing device (16) is adapted and configured to update the data stored in remote storage means (50) of said central remote device (20), in said mobile storage means (40) of said at least one mobile processing device (14), or in local storage means (30) of said at least one dispensing assemblies (12).

13. The system (10) for controlling the dispensing of fuel according to any one of the preceding claims, **characterized in that** said short-range wireless communication network (13) is of the Bluetooth type.

14. A method for controlling the dispensing of fuel by means of at least one dispensing assembly (12), at least one mobile processing device (14) operated by a respective driver user (72), and a central remote processing device (20), said at least one dispensing assembly (12) and said at least one mobile processing device (14) being mutually connectable via a short-range wireless communication network (13), said at least one mobile processing device (14) and said central remote device (20) being mutually connectable via a telematic communication network (18),
**characterized in that** it comprises the steps of:
- establishing a short-range wireless communication between said at least one mobile processing device (14) and said at least one dispensing assembly (12), via respective short-range wireless communication modules (26, 36); and
- enabling the dispensing of fuel if said driver user (72) is included in a list of driver users (72) registered and authorized at said at least one dispensing assembly (12) by means of an authorization verification module (34) comprised in said at least one mobile processing device (14), said list of driver users (72) registered and authorized at said at least one dispensing assembly (12) being stored in mobile storage means (40) comprised in said at least one mobile processing device (14) wherein said enabling of the fuel dispensing performed by said authorization verification module (34) comprises the sending of a dispensing start command from said at least one mobile processing device (14) toward said at least one dispensing assembly (12) via said short-range wireless communication network (13).

15. The method for controlling the dispensing of fuel according to claim 14, **characterized in that** said enabling of the fuel dispensing performed by said authorization verification module (34) is limited in time and its duration corresponds to an adjustable time period.

16. The method for controlling the dispensing of fuel according to claim 14 or 15, **characterized in that** said short-range wireless communication network (13) is of the Bluetooth type.

## Patentansprüche

1. Ein System (10) zur Steuerung der Kraftstoffabgabe, das Folgendes umfasst: mindestens einen Abgabeaufbau (12), mindestens eine mobile Verarbeitungsvorrichtung (14), die von einem Fahrer-Nutzer (72) betätigt wird, und eine zentrale Datenfernverarbeitungsvorrichtung (20), wobei der mindestens eine Abgabeaufbau (12) und die mindestens eine mobile Verarbeitungsvorrichtung (14) miteinander über ein Kurzstreckenfunknetz (13) verbindbar sind, wobei die mindestens eine mobile Verarbeitungsvorrichtung (14) und die zentrale Fernverarbeitungsvorrichtung (20) miteinander über ein telematisches Kommunikationsnetz (18) verbindbar sind;
**dadurch gekennzeichnet, dass** die mindestens eine mobile Verarbeitungsvorrichtung (14) Folgendes umfasst:
- mobile Speichermittel (40), ausgebildet, um eine Liste von Fahrern-Nutzern (72) zu speichern, die an dem mindestens einen Abgabeaufbau (12) registriert und autorisiert sind; und
- ein Autorisierungsüberprüfungsmodul (34), ausgebildet, um die Kraftstoffabgabe infolge der Verbindung zwischen der mindestens einen mobilen Verarbeitungsvorrichtung (14) und dem mindestens einen Abgabeaufbau (12) über entsprechende Kurzstreckenfunk-Kommunikationsmodule (26, 36) zu ermöglichen, wenn der Fahrer-Nutzer (72) in die Liste der Fahrer-Nutzer (72) eingeschlossen ist, die an dem Abgabeaufbau (12) registriert und autorisiert sind;
wobei das Ermöglichen der Kraftstoffabgabe, das von dem Autorisierungsüberprüfungsmodul (34) durchgeführt wird, das Senden eines Abgabe-Startbefehls von der mindestens einen mobilen Verarbeitungsvorrichtung (14) an den mindestens einen Abgabeaufbau (12) über das Kurzstreckenfunknetz (13) umfasst.

2. Das System (10) zur Steuerung der Kraftstoffabgabe gemäß Anspruch 1, **dadurch gekennzeichnet, dass** das Ermöglichen der Kraftstoffabgabe, das von dem Autorisierungsüberprüfungsmodul (34) durchgeführt wird, zeitlich begrenzt ist und seine Dauer einem einstellbaren Zeitraum entspricht.

3. Das System (10) zur Steuerung der Kraftstoffabgabe gemäß einem beliebigen der obigen Ansprüche, **dadurch gekennzeichnet, dass** die mindestens eine mobile Verarbeitungsvorrichtung (14) ausgebildet ist, um Daten zu vergangenen Auffüllvorgängen von dem mindestens einen Abgabeaufbau (12) über das Kurzstreckenfunknetz (13) zu empfangen und über das telematische Kommunikationsnetz (18) an die zentrale Fernverarbeitungsvorrichtung (20) weiterzuleiten.

4. Das System (10) zur Steuerung der Kraftstoffabgabe gemäß einem beliebigen der obigen Ansprüche, **dadurch gekennzeichnet, dass** die mindestens eine mobile Verarbeitungsvorrichtung (14) ausgebildet ist, um die Liste von Fahrern-Nutzern (72) zu empfangen, die an dem mindestens einen Abgabeaufbau (12) von der zentralen Fernverarbeitungsvorrichtung (20) über das telematische Kommunikationsnetz (18) registriert und autorisiert wurden.

5. Das System (10) zur Steuerung der Kraftstoffabgabe gemäß einem beliebigen der obigen Ansprüche, **dadurch gekennzeichnet, dass** die mindestens eine mobile Verarbeitungsvorrichtung (14) ausgebildet ist, um von dem mindestens einen Abgabeaufbau (12) die Version der Liste von Fahrern-Nutzern (72) abzufragen, die aktuell an dem mindestens einen Abgabeaufbau (12) registriert und autorisiert sind, und die Version mit der Version der Liste registrierter und autorisierter Fahrer-Nutzer (72) zu vergleichen, die in der mindestens einen mobilen Verarbeitungsvorrichtung (14) gespeichert sind.

6. Das System (10) zum Steuern der Kraftstoffabgabe gemäß einem beliebigen der obigen Ansprüche, **dadurch gekennzeichnet, dass** die mindestens eine mobile Verarbeitungsvorrichtung (14) ausgebildet ist, um die Liste von Fahrern-Nutzern (72), die an dem mindestens einen Abgabeaufbau (12) registriert und autorisiert sind, über das Kurzstreckenfunknetz (18) an den mindestens einen Abgabeaufbau (12) weiterzuleiten.

7. Das System (10) zum Steuern der Kraftstoffabgabe gemäß einem beliebigen der obigen Ansprüche, **dadurch gekennzeichnet, dass** die mobilen Speichermittel (40) der mindestens einen mobilen Verarbeitungsvorrichtung (14) weiter ausgebildet sind, um Betriebsparameter des mindestens einen Abgabeaufbaus (12) zu speichern.

8. Das System (10) zum Steuern der Kraftstoffabgabe gemäß Anspruch 7, **dadurch gekennzeichnet, dass** die mindestens eine mobile Verarbeitungsvorrichtung (14) ausgebildet ist, um die Betriebsparameter des mindestens einen Abgabeaufbaus (12) über das telematische Kommunikationsnetz (18) von der zentralen Fernverarbeitungsvorrichtung (20) zu empfangen.

9. Das System (10) zum Steuern der Kraftstoffabgabe gemäß Anspruch 7 oder 8, **dadurch gekennzeichnet, dass** die mindestens eine mobile Verarbeitungsvorrichtung (14) ausgebildet ist, um von dem mindestens einen Abgabeaufbau (12) die Version der Betriebsparameter abzufragen, die aktuell in dem mindestens einen Abgabeaufbau (12) konfiguriert ist, und die Version mit der Version der Betriebsparameter zu vergleichen, die in der mindestens einen mobilen Verarbeitungsvorrichtung (14) gespeichert ist.

10. Das System (10) zum Steuern der Kraftstoffabgabe gemäß Anspruch 7, 8 oder 9, **dadurch gekennzeichnet, dass** die mindestens eine mobile Verarbeitungsvorrichtung (14) weiter ausgebildet ist, um die Liste von Fahrern-Nutzern (72) die an dem mindestens einen Abgabeaufbau (12) registriert und autorisiert sind, über das Kurzstreckenfunknetz (18) an den mindestens einen Abgabeaufbau (12) weiterzuleiten.

11. Das System (10) zum Steuern der Kraftstoffabgabe gemäß einem beliebigen der obigen Ansprüche, **dadurch gekennzeichnet, dass** es weiter eine Manager-Verarbeitungsvorrichtung (16), betätigt von einem jeweils zuständigen Nutzer (70), umfasst, wobei die Manager-Vorrichtung (16) und die zentrale Fernverarbeitungsvorrichtung (20) miteinander über das telematische Kommunikationsnetz (18) verbindbar sind, wobei die Manager-Vorrichtung (16) konfiguriert ist, um es dem zuständigen Nutzer (70) zu ermöglichen, mit der zentralen Fernverarbeitungsvorrichtung (20) zu interagieren.

12. Das System (10) zum Steuern der Kraftstoffabgabe gemäß Anspruch 11, **dadurch gekennzeichnet, dass** die Manager-Verarbeitungsvorrichtung (16) ausgebildet und konfiguriert ist, um die Daten zu aktualisieren, die in Fernspeichermitteln (50) der zentralen Fernverarbeitungsvorrichtung (20), in den mobilen Speichermitteln (40) der mindestens einen mobilen Verarbeitungsvorrichtung (14) oder in lokalen Speichermitteln (30) der mindestens einen Abgabeaufbauten (12) gespeichert sind.

13. Das System (10) zum Steuern der Kraftstoffabgabe gemäß einem beliebigen der obigen Ansprüche, **dadurch gekennzeichnet, dass** das Kurzstreckenfunknetz (13) vom Bluetooth-Typ ist.

14. Ein Verfahren zum Steuern der Kraftstoffabgabe mit Hilfe mindestens eines Abgabeaufbaus (12), mindestens einer mobilen Verarbeitungsvorrichtung (14), die von einem entsprechenden Fahrer-Nutzer (72) bedient wird, und einer zentralen Fernverarbeitungsvorrichtung (20), wobei der mindestens eine Abgabeaufbau (12) und die mindestens eine mobile Verarbeitungsvorrichtung (14) miteinander über ein Kurzstreckenfunknetz (13) verbindbar sind, wobei die mindestens eine mobile Verarbeitungsvorrichtung (14) und die zentrale Fernverarbeitungsvorrichtung (20) miteinander über ein telematisches Kommunikationsnetz (18) verbindbar sind,
**dadurch gekennzeichnet, dass** es folgende Schritte umfasst:
- das Herstellen einer Kurzstreckenfunk-Kommunikation zwischen der mindestens einen mobilen Verarbeitungsvorrichtung (14) und dem mindestens einen Abgabeaufbau (12) über jeweilige Kurzstreckenfunk-Kommunikationsmodule (26, 36) und
- das Ermöglichen der Kraftstoffabgabe, wenn der Fahrer-Nutzer (72) in eine Liste von Fahrern-Nutzern (72) eingeschlossen ist, die über ein Autorisierungsüberprüfungsmodul (34) an dem mindestens einen Abgabeaufbau (12) registriert und autorisiert sind, das in der mindestens einen mobilen Verarbeitungsvorrichtung (14) umfasst ist; wobei die Liste an dem mindestens einen Abgabeaufbau (12) registrierter und autorisierter Fahrer-Nutzer (72) in mobilen Speichermitteln (40) gespeichert ist, die in der mindestens einen mobilen Verarbeitungsvorrichtung (14) umfasst sind; wobei das Ermöglichen der Kraftstoffabgabe, das von dem Autorisierungsüberprüfungsmodul (34) vorgenommen wird, das Senden eines Abgabe-Startbefehls von der mindestens einen mobilen Verarbeitungsvorrichtung (14) an den mindestens einen Abgabeaufbau (12) über das Kurzstreckenfunknetz (13) umfasst.

15. Das Verfahren zum Steuern der Kraftstoffabgabe gemäß Anspruch 14, **dadurch gekennzeichnet, dass** das Ermöglichen der Kraftstoffabgabe, das von dem Autorisierungsüberprüfungsmodul (34) vorgenommen wird, zeitlich begrenzt ist und seine Dauer einem einstellbaren Zeitraum entspricht.

16. Das Verfahren zum Steuern der Kraftstoffabgabe gemäß Anspruch 14 oder 15, **dadurch gekennzeichnet, dass** das Kurzstreckenfunknetz (13) vom Bluetooth-Typ ist.

## Revendications

1. Système (10) pour contrôler la distribution de carburant, comprenant au moins un ensemble de distribution (12), au moins un dispositif de traitement mobile (14) actionné par un conducteur utilisateur respectif (72), et un dispositif de traitement central à distance (20), ledit au moins un ensemble de distribution (12) et ledit au moins un dispositif de traitement mobile (14) pouvant être connectés entre eux au moyen d'un réseau de communication sans fil à courte portée (13), ledit au moins un dispositif de traitement mobile (14) et ledit dispositif central à distance (20) pouvant être connectés entre eux au moyen d'un réseau de communication télématique (18), **caractérisé en ce que** ledit au moins un dispositif de traitement mobile (14) comprend :
- des moyens de stockage mobiles (40) configurés pour stocker une liste de conducteurs utilisateurs (72) qui sont enregistrés et autorisés au niveau dudit au moins un ensemble de distribution (12); et
- un module de vérification d'autorisation (34) configuré pour permettre la distribution de carburant à la suite de la connexion entre ledit au moins un dispositif de traitement mobile (14) et ledit au moins un ensemble de distribution (12), grâce à des modules de communication sans fil à courte portée respectifs (26, 36), si ledit conducteur utilisateur (72) est inclus dans ladite liste de conducteurs utilisateurs (72) enregistrés et autorisés au niveau dudit dispositif de distribution (12),
où ladite activation de la distribution de carburant effectuée par ledit module de vérification d'autorisation (34) comprend l'envoi d'une commande de démarrage de distribution depuis ledit au moins un dispositif de traitement mobile (14) vers ledit au moins un dispositif de distribution (12) via ledit réseau de communication sans fil à courte portée (13).

2. Système (10) pour contrôler la distribution de carburant selon la revendication 1, **caractérisé en ce que** ladite activation de la distribution de carburant effectuée par ledit module de vérification d'autorisation (34) est limitée dans le temps et sa durée correspond à une période de temps réglable.

3. Système (10) pour contrôler la distribution de carburant selon l'une quelconque des revendications précédentes, **caractérisé en ce que** ledit au moins un dispositif de traitement mobile (14) est configuré pour recevoir des données relatives aux opérations de ravitaillement passées provenant dudit au moins un ensemble de distribution (12), via ledit réseau de communication sans fil à courte portée (13), et pour les transmettre vers ledit dispositif central à distance (20) via ledit réseau de communication télématique (18).

4. Système (10) pour contrôler la distribution de carburant selon l'une quelconque des revendications précédentes, **caractérisé en ce que** ledit au moins un dispositif de traitement mobile (14) est configuré pour recevoir ladite liste de conducteurs utilisateurs (72) enregistrés et autorisés au niveau dudit au moins un ensemble de distribution (12) à partir dudit dispositif central à distance (20) via ledit réseau de communication télématique (18).

5. Système (10) pour contrôler la distribution de carburant selon l'une quelconque des revendications précédentes, **caractérisé en ce que** ledit au moins un dispositif de traitement mobile (14) est configuré pour demander audit au moins un ensemble de distribution (12) la version de ladite liste de conducteurs utilisateurs (72) actuellement enregistrés et autorisés au niveau dudit au moins un ensemble de distribution (12) et pour comparer ladite version avec la version de ladite liste de conducteurs utilisateurs enregistrés et autorisés (72) stockée dans ledit au moins un dispositif de traitement mobile (14).

6. Système (10) pour contrôler la distribution de carburant selon l'une quelconque des revendications précédentes, **caractérisé en ce que** ledit au moins un dispositif de traitement mobile (14) est configuré pour transmettre ladite liste de conducteurs utilisateurs (72) enregistrés et autorisés au niveau dudit au moins un ensemble de distribution (12) vers ledit au moins un ensemble de distribution (12) via ledit réseau de communication sans fil à courte portée (18).

7. Système (10) pour contrôler la distribution de carburant selon l'une quelconque des revendications précédentes, **caractérisé en ce que** lesdits moyens de stockage mobiles (40) dudit au moins un dispositif de traitement mobile (14) sont en outre configurés pour stocker les paramètres de fonctionnement dudit au moins un ensemble de distribution (12).

8. Système (10) pour contrôler la distribution de carburant selon la revendication 7, **caractérisé en ce que** ledit au moins un dispositif de traitement mobile (14) est configuré pour recevoir lesdits paramètres de fonctionnement dudit au moins un ensemble de distribution (12) à partir dudit dispositif central à distance (20) via ledit réseau de communication télématique (18).

9. Système (10) pour contrôler la distribution de carburant selon la revendication 7 ou 8, **caractérisé en ce que** ledit au moins un dispositif de traitement mobile (14) est configuré pour demander audit au moins un ensemble de distribution (12) la version desdits paramètres de fonctionnement actuellement configurés dans ledit au moins un ensemble de distribution (12) et pour comparer ladite version avec la version desdits paramètres de fonctionnement qui est stockée dans ledit au moins un dispositif de traitement mobile (14).

10. Système (10) pour contrôler la distribution de carburant selon les revendications 7, 8 ou 9, **caractérisé en ce que** ledit au moins un dispositif de traitement mobile (14) est en outre configuré pour transmettre ladite liste de conducteurs utilisateurs (72) enregistrés et autorisés au niveau dudit au moins un ensemble de distribution (12) vers ledit au moins un ensemble de distribution (12) via ledit réseau de communication sans fil à courte portée (18).

11. Système (10) pour contrôler la distribution de carburant selon l'une quelconque des revendications précédentes, **caractérisé en ce qu'**il comprend en outre un dispositif de traitement gestionnaire (16) actionné par un utilisateur responsable (70) respectif, ledit dispositif gestionnaire (16) et ledit dispositif central à distance (20) pouvant être connectés mutuellement via ledit réseau de communication télématique (18), ledit dispositif de gestion (16) étant configuré pour permettre audit utilisateur responsable (70) d'interagir avec ledit dispositif de traitement central à distance (20).

12. Système (10) pour contrôler la distribution de carburant selon la revendication 11, **caractérisé en ce que** ledit dispositif de traitement gestionnaire (16) est adapté et configuré pour mettre à jour les données stockées dans des moyens de stockage à distance (50) dudit dispositif central à distance (20), dans lesdits moyens de stockage mobiles (40) dudit au moins un dispositif de traitement mobile (14), ou dans des moyens de stockage locaux (30) dudit au moins un ensemble de distribution (12).

13. Système (10) pour contrôler la distribution de carburant selon l'une quelconque des revendications précédentes, **caractérisé en ce que** ledit réseau de communication sans fil à courte portée (13) est du type Bluetooth.

14. Procédé pour contrôler la distribution de carburant au moyen d'au moins un ensemble de distribution (12), d'au moins un dispositif de traitement mobile (14) actionné par un conducteur utilisateur respectif (72) et d'un dispositif de traitement central à distance (20), ledit au moins un ensemble de distribution (12) et ledit au moins un dispositif de traitement mobile (14) pouvant être connectés mutuellement via un réseau de communication sans fil à courte portée (13), ledit au moins un dispositif de traitement mobile (14) et ledit dispositif central à distance (20) pouvant être connectés entre eux via un réseau de communication télématique (18),
**caractérisé en ce qu'**il comprend les étapes consistant à:
- établir une communication sans fil à courte portée entre ledit au moins un dispositif de traitement mobile (14) et ledit au moins un ensemble de distribution (12), via des modules de communication sans fil à courte portée respectifs (26, 36) ; et
- l'autorisation de la distribution de carburant si ledit conducteur utilisateur (72) figure dans une liste de conducteurs utilisateurs (72) enregistrés et autorisés au niveau dudit au moins un dispositif de distribution (12) au moyen d'un module de vérification d'autorisation (34) compris dans ledit au moins un dispositif de traitement mobile (14), ladite liste de conducteurs utilisateurs (72) enregistrés et autorisés au niveau dudit au moins un ensemble de distribution (12) étant stockée dans des moyens de stockage mobiles (40) compris dans ledit au moins un dispositif de traitement mobile (14), où ladite activation de la distribution de carburant effectuée par ledit module de vérification d'autorisation (34) comprend l'envoi d'une commande de démarrage de distribution depuis ledit au moins un dispositif de traitement mobile (14) vers ledit au moins un ensemble de distribution (12) via ledit réseau de communication sans fil à courte portée (13).

15. Procédé de contrôle de la distribution de carburant selon la revendication 14, **caractérisé en ce que** ladite activation de la distribution de carburant effectuée par ledit module de vérification d'autorisation (34) est limitée dans le temps et sa durée correspond à une période de temps réglable.

16. Procédé de contrôle de la distribution de carburant selon la revendication 14 ou 15, **caractérisé en ce que** ledit réseau de communication sans fil à courte portée (13) est du type Bluetooth.
